# EUROPEAN PATENT APPLICATION

(11) **EP 0 958 723 A1**
(43) Date of publication of application: **24.11.1999**
(21) Application number: 98914894.5
(22) Date of filing: 24.04.1998
(51) Int. Cl.: A01C 3/00

(54) **INSTALLATION FOR THE PURIFICATION OF LIQUID MANURES AND THE LIKE**

(30) Priority: 04.11.1997 ES 9702285
(71) Applicant: Lopez Martinez, Santiago, 29600 Malaga (ES)
(72) Inventor: Lopez Martinez, Santiago, 29600 Malaga (ES)
(74) Representative: Maldonado Jordan, Julia
(86) International application number: ES9800107
(87) International publication number: WO9922581

(57) **Abstract**

The process begins with a liquid manure reception pool (1), of large capacity, where the manure passes to a conditioning trench (4), and then to a group for the separation of solids in which a power sieve (6) and a press (7) are used with the solids being eliminated while the liquids pass to a flocculation canal (9), of considerable length, which empties into a pumping trench (12) from which the liquids are pumped into a decanting pool (14), and from this to a refining pool (15), and then to a flow regulation pool and from there the liquid passes through a pair of filters (18) and (19) before reaching a longitudinal alignment of pools or chambers of reduced dimensions in which first an aeration and pre-oxidation phase, and then a final oxidation phase are produced which concludes the purification of the liquids.

## Description

### OBJECT OF THE INVENTION

The present invention refers to an installation intended for the purification of dejections proceeding from porcine exploitations, i.e., those commonly referred to as "liquid manures" and other livestock exploitations that generate similar residues.

The purpose of the invention is to adapt the wastes to the requirements set by the corresponding Environmental Protection Authorities and to do so with a cost margin that makes the installation economically viable.

### ANTECENDENTS OF THE INVENTION

As is known, liquid manures and other similar residues are highly contaminating to land, water tables, etc., for which reason current legislation prohibits their dumping in their natural state, obliging a previous purification allowing solid residues, on the one hand, to be separated and purified and liquid wastes, on the other, to be dumped as long as they do not exceed pre-established pollution limits.

At present, one of the systems of purification known is that of pooling, in which purification is reached by the natural evaporation of the water contained in the liquid manure. This presupposes the availability of pools or lagoons of considerable surface and scant depth, which implies a considerable investment in land as well as in the installations themselves. In order to accelerate the natural evaporation process, also known is the practice of covering these pools with sheets of transparent plastic to achieve a greenhouse effect which augments the temperature of the liquid manure and favours evaporation with elevated slopes in the transparent covering so that the condensation slides down it thus falling outside the pool. But this solution does not significantly, much less definitively, resolve the problem explained above.

Another system commonly used is that of decanting through the use of centrifugal or belt filters where the separation of the solids that constitute the liquid manure is carried out. Both of these methods imply significant financial investment and energy consumption.

### DESCRIPTION OF THE INVENTION

The installation which the invention proposes for separating solids and liquids in treated liquid manures and to purify the liquids so that they can be eliminated without the slightest risk of contaminating is based on a series of pools through which the liquid manure sequentially passes while receiving different treatments which will be further described below.

To be more specific, the invention is based on a pool for the reception and storage of liquid manures of great capacity from which they are pumped into a conditioning trench provided with an agitator for homogenising the liquid manure so that in the first pool two complementary effects are obtained: on the one hand, to control the input into the pumping trench and on the other, a decanting effect within the pool itself with the accumulation of solid sediments at its bottom. A ramp permits their periodic extraction through adequate means, such as, for example, a tractor with a dredging shovel.

From the aforementioned conditioning trench, the liquid manures pass through a rotating filter or power sieve for the separation of solids which works in conjunction with a dam constructed immediately beside it with which the high degree of humidity which the solids contain after leaving the power sieve is reduced, solids which can be extracted from the installation at this point for use, for example, as organic fertiliser given that it is especially rich in phosphorous and nitrogen.

In this area there are also some flocculant deposits constructed, which, in collaboration with a dosing pump, inject this product at the exit of the rotating filter, taking advantage of the fact that turbulence is formed at said exit, initiating at this moment the separation of flocculi which begin to form along small flocculation canal, of considerable length, which empties into the trench or pumping chamber previously mentioned located near the first pool.

From this pumping trench, which receives the now flocculated liquid manure and where all the suspended solids are deposited, the liquid, now nearly without particles, is pumped to a second pool adjacent to the reception of the liquid manures and with similar characteristics to it, where decanting is effected. This pool, due to its great dimensions, permits a holding time of some 32 hours, so that sedimentation can occur with the solids remaining from the first flocculation.

Next, a third pool is established for refining and clarifying by means of aluminium chloride, where the liquid will remain another 12 hours and the traces resulting from this refining and clarifying operation which remain in suspension can be swept toward the small flocculation canal which passes by one of the extremities of this pool.

From the refining and clarifying pool the liquids pass to a fourth flow regulation pool which has two level sensors, maximum and minimum, so that when the maximum level sensor detects that the pool is full it produces a signal which initiates the final filtration - aeration - oxidation system which is maintained until the minimum level is reached at which point it is stopped. Thus continuous functioning of the installation independent of the flow of liquid manure entering into the initial pool is achieved.

From the fourth pool the liquid manure is pumped towards a pair of filters, one of silica sand and another of diatoms and after this filtering phase the liquid manures are lead or pumped towards a group of four chambers for aeration and pre-oxidation, where the liquid manure is passed from one to the other. In both of these a pump is installed, each with a corresponding Venturi (air jet pump) which injects air into the bottom of the chamber producing a diffusion of micro-bubbles of air enriched with oxygen and ozone with which the elimination of gases dissolved in the liquid is produced. In these aeration chambers foam is produced and consequently creams which are eliminated by jets of water towards the small flocculation canal which also passes beside these chambers.

Immediately beside these, four final oxidation chambers are located, identical to those of aeration through which the liquid passes by means of a system of communicating hoses. These chambers are endowed with a system of diffusion achieved by porous porcelain discs mounted in their bottoms.

There only remains to point out that while the aforementioned pools and chambers are obviously located in the open air, the flocculant deposits, sand and diatom filters, ozone generator, power sieve, press and other mechanisms are located in a machinery building where they are appropriately protected.

### DESCRIPTION OF THE DRAWINGS

To complement the description being made and in order to provide better comprehension of the characteristics of the invention, and in accordance with a preferable example of the practical realisation of the same, as an integral part of this description, a set of drawings accompanies it in which the following are represented in an illustrative and non-limitative form:
Figure 1. - Shows, according to a perspective schematic representation, an installation for the purification of liquid manures and similar wastes realised in accordance with the objectives of the invention in question.
Figure 2. - Shows a schematic top view of the installation represented in the previous figure, in which the trajectory of the liquid manures throughout the installation is shown as well.

### PREFERENTIAL REALISATION OF THE INVENTION

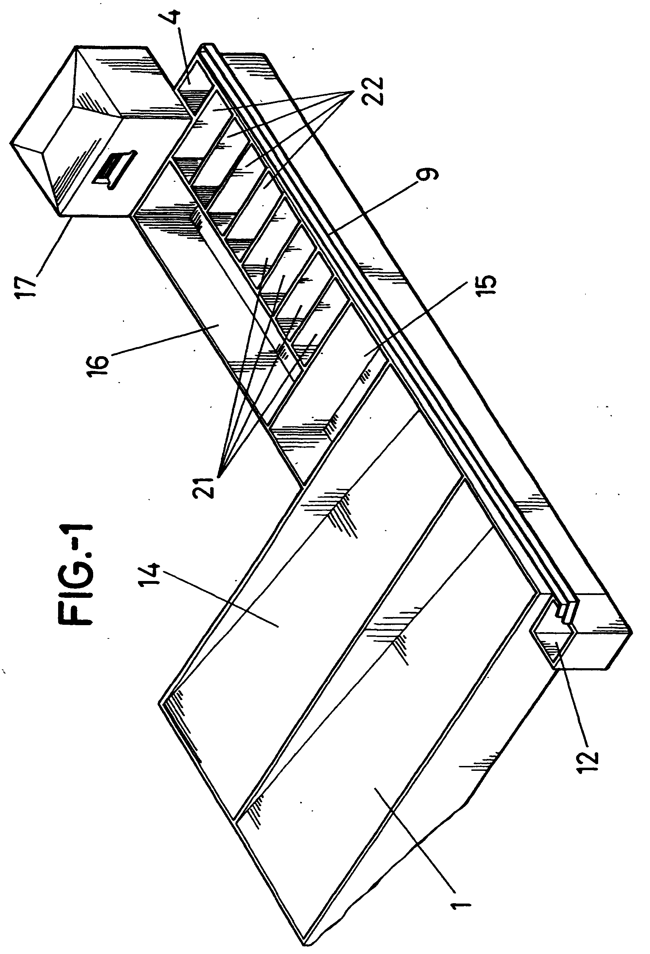

From viewing these figures one can observe that the installation proposed consists of a firstpool (1) for receiving the liquid manures of great storage capacity whose bottom forms a ramp, as can be seen especially in figure 1, for facilitating access to its interior and extraction from the same of solids deposited there by decanting, obviously after the elimination of the liquid phase or component through pumping, the extraction of solids which may be done periodically, say, once a year for example.

From the liquid manure reception pool (1) and with the assistance of a pump (2), the liquid manures are sent via canalisation (3) to a conditioning trench (4) supplied with an agitator (5) for homogenising the liquid manure. This trench (4) may also receive the liquid manure directly without its passing through the reception pool (1) in the epochs of the year when little liquid manure is generated.

Immediately following a phase for the separation of solids is established so that the liquid manures homogenised in the trench (4) by the agitator (5) are passed through a rotating filter (6) or power sieve, preferably of 750 microns, endowed with a system of pipes and spigots which permits the regulation of the manure flow, depending on the quantity of solids it contains, as well as a system for returning the manure to the reception trench, which keeps it from accumulating thus avoiding its overflow. It is foreseen that the filter cylinder be periodically cleaned to prevent the accumulation of sediments in its openings. The filtering cylinder with 0.76 mm of mesh opening is 628 mm in diameter and 2,000 mm in length, with electrostatically welded stainless steel laminar profiles, powered by a 9-rpm motor reducer with a 35-mm diameter hollow axis and a 43-kg torque. It has a PVC and stainless steel double scraper.

Next to the power sieve (6) a press (7) is located with which the partial drying of the solids is carried out, so that the solids separated in the sieved material are lead from the power sieve (6) by a steel ramp to a hopper that feeds said piston press (7) where the high degree of humidity that the solids contain is reduced leaving it in an optimum state for use. The solid obtained is mainly rich in phosphorous and nitrogen, as well as other substances making it an excellent organic fertiliser.

For the press, a piston diameter of 200 mm and a ram stroke of 500 mm have been foreseen, with a frequency of 50/60 cycles per hour. A 1,500-rpm motor giving it an impulse of 3,000/4,000 kg runs it.

The liquids freed from the solids in the power sieve (6) and in the press (7) pass via a duct, to a flocculation canal (9), of considerable length and have been previously incorporated with a flocculent product administered from some deposits (10) with the assistance of a dosing pump (11). More precisely, taking advantage of the efflux pipe of the rotary filter (6) and where turbulence is formed the connection of the flocculant feed pipe is made.

Throughout the length of the canal (9) separation of liquid and solid takes place, due to the progressive formation of the flocculi, until said canal (9) empties into a pumping trench (12) located at its end, more precisely beside the liquid manure reception pool (1) as can be observed in any of the figures.

The pumping trench (12) is of adequate size for receiving the now flocculated liquid manure, leaving all the solids in suspension and allowing the liquid to be pumped nearly without particles and with the assistance of the corresponding pump (13), to a large decanting pool (14) laterally adjacent to the liquid manure reception pool (1) and, preferably, with a form and dimensions coinciding with it. In this decanting pool (14) the liquid manure is to be held for a long period, some 32 hours, so that the sedimentation of the solids that may remain after the first flocculation can take place. These remains will be periodically extracted in the same way as that described for the liquid manure reception pool (1).

The liquids pass from this decanting pool (14) to another pool (15), considerably smaller, where a refining and clarifying phase is carried out through the addition of aluminium chloride. This pool (15) is adjacent to the canal (9), so that the resulting traces remaining in suspension can be swept towards said flocculation canal (9).

The liquids pass from the pool (15) to a flow regulation pool (16), which, in its turn, is laterally adjacent to the building (17) in which the power sieve (6), press (7), flocculant deposits (10) and other complementary elements of the installation, which will be referred to later, are located.

This pool (16) has two level sensors, one for maximum level and another for minimum level, so that when the pool is full, a signal is generated which will put all of the final filtration - aeration - oxidation system into operation established immediately beside it and consisting of a pair of filters (18) and (19), one of silica sand and another of diatoms, located in the interior of the building (17) and of the type which can be cleaned using counter-current, sending the remains of the impurities to the flocculation canal (9).

From these filters (18) and (19), which receive the liquid from the pool (16), it passes, via canalisation (20), to a group of four chambers (21) of aeration and pre-oxidation, of appropriate dimensions, in which the aeration is achieved through respective pumps with their corresponding Venturi (air jet pumps) submerged at the bottom of the chambers where air is injected, creating a diffusion of micro-bubbles with which the elimination of gases dissolved in the liquid is produced.

In this phase of the process, foams are produced and at the same time and as a consequence of the same creams are also formed, which are swept away by jets to the flocculation canal (9), also laterally adjacent to the same as can be seen in the figures. This jet sweeping system is programmed to function intermittently depending on the quantity of creams being produced.

The communication between these chambers is accomplished by means of communicating hoses and the transfer is achieved from below above, allowing the decanted particles to remain on the bottom and those suspended in floatation remain on the surface, retaining in this way the particles in each one of the pools or chambers.

Finally and immediately next to these chambers of aeration and pre-oxidation, four more chambers (22) of final oxidation are established, similar to the previous ones, which receive the water by the same system and which are endowed with a system of diffusion by porous porcelain discs situated in their bottom, over a grid of stainless steel tubing, assisted by a ozone generator (23) also located inside the building (17).

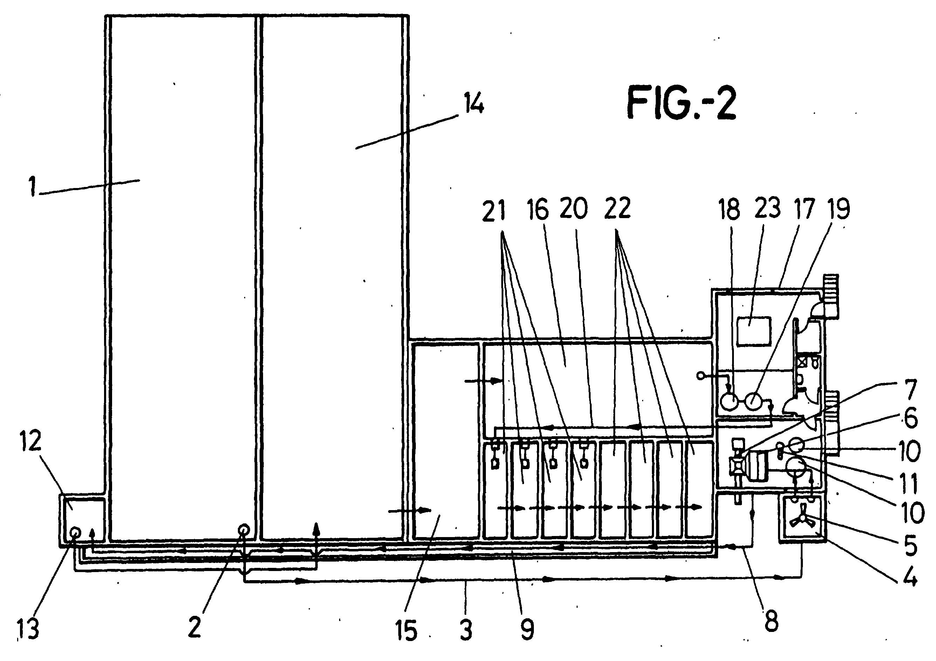

There only remains to finally point out that in said building (17) and as can be observed especially in figure 2, two independent zones are established, which can be referred to as the dirty zone and the clean zone, since in the dirty zone the process of sieving, pressing and flocculant preparation are carried out while in the clean zone all of the machinery intended for the generation of ozone and the filtration system is located, with both zones occupying the upper floor of the building while on the lower floor all of the pumps of the different treatment systems are installed so that being below the level of the pools there are no problems with drainage.

It is not considered necessary to make this description more extensive so that an expert in the material should understand the range of the invention and the advantages that it offers.

The materials, form, size and distribution of the elements may be subject to variation as long as such variation does not imply an essential alteration of the invention.

The terms used in this memorandum should be taken in the fullest sense of their meaning and not in their limited sense.

## Claims

1. Installation for the purification of liquid manure and similar wastes, characterised by its construction based on a pool (1) for the reception and storing of liquid manure, of large capacity, from which said liquid manure is pumped into a conditioning trench (4) for the same, provided with an agitator and from there is passed through a group for separating solids, consisting of a power sieve (6), and a press (7) for the pressing and evacuation of the solids, while the liquids pass to a flocculation canal (9), of considerable length, which empties into a pumping trench (12) from which the liquids are pumped to a decanting pool (14) of considerable capacity, from which the liquids pass to a pool (15) of refinement and clarification through aluminium chloride, from this to another pool (16) for flow regulation, and from this last pool to a pair of filters (18) and (19), one of silica sand and the other of diatoms, from these to a group of four chambers or tanks (21) of aeration and pre-oxidation, and finally to another four chambers or tanks (22) of final oxidation.

2. Installation for the purification of liquid manure and similar wastes, according to the 1^{st} claim, characterised by the fact that liquid manure reception pool (1) as well as the first decanting pool (14) have a ramp in their bottoms permitting the periodic entry of a vehicle for the extraction of the solid residues decanted on their bottoms, after elimination by pumps of the liquid phase.

3. Installation for the purification of liquid manure and similar wastes, according to the 1^{st} claim, characterised by the fact that the coupling of a pipe at the efflux of the liquids from the solid separator group defined by a power sieve (6), and a press (7) a pipe for the addition of flocculant proceeding from deposits (10) assisted by a dosing pump (11).

4. Installation for the purification of liquid manure and similar wastes, according to claim one, characterised by the fact that the flow regulation pool (22) possesses two level sensors, maximum and minimum, which put into operation the final filtration - aeration - oxidation system when the pool is full and which maintains said operative situation until the same reaches the minimum level determined by the second sensor.

5. Installation for the purification of liquid manure and similar wastes, according to the 1^{st} claim characterised by the fact that the refining pool (15), as well as the tanks or chambers for aeration (21) and final oxidation (22) are laterally adjacent to the flocculation canal (3) and are situated at the same level, to permit the transfer by water jets towards the said flocculation canal (9), of the creams that form over the surface of said tanks or chambers.

6. Installation for the purification of liquid manure and similar wastes, according to the first claim, characterised by the fact that the transfer between the successive aeration (21) and oxidation (22) chambers is accomplished by means of communicating hoses from below above, allowing the decanted particles to remain on the bottom and the ones suspended in floatation to be retained in the pool itself so they can be swept towards the flocculation canal (9).

7. Installation for the purification of liquid manure and similar waste, according to the 1^{st} claim characterised by the fact that each aeration chamber has a Ventury (air jet pump) submerged in its bottom, where it injects air.

8. Installation for the purification of liquid manure and similar wastes, according to the 1^{st} claim characterised by the fact that each final oxidation chamber (22) is connected to an ozone generator (23) and is endowed with a diffusion system of porous porcelain discs.

9. Installation for the purification of liquid manure and similar wastes, according to previous claims, characterised by the fact that while the pools and trenches are located in the open air, the power sieve (6), press (7), flocculant deposits (10) and its dosing pump (11), the filters (18) and (19) and the ozone generator (23), are situated inside a machinery building (17).
